# EUROPEAN PATENT SPECIFICATION

(11) **EP 3 406 660 B1**
(45) Date of publication and mention of the grant of the patent: **01.06.2022**
(21) Application number: 17741310.1
(22) Date of filing: 13.01.2017
(51) Int. Cl.: C08J 7/043, C08J 7/046, C08J 7/12, B32B 27/30, C08F 290/06, B29C 59/16, B29C 35/08, C08J 7/04

(54) **HARD COAT LAMINATE FILM**
HARTBESCHICHTUNGSVERBUNDFOLIE
FILM STRATIFIÉ À REVÊTEMENT DUR

(30) Priority: 18.01.2016 JP 2016006936
(43) Date of publication of application: 28.11.2018
(73) Proprietor: Riken Technos Corporation, Tokyo 101-8336 (JP)
(72) Inventor: WASHIO, Nozomu, Tokyo 101-8336 (JP)
(74) Representative: J A Kemp LLP
(86) International application number: PCT/JP2017/001027
(87) International publication number: WO 2017/126431

(56) References cited:
- EP-A1- 2 612 756
- EP-A1- 3 150 640
- EP-A1- 3 388 237
- WO-A1-2015/171340
- WO-A1-2015/182253
- WO-A1-2015/182253
- WO-A1-2016/147733
- WO-A1-2016/147734
- WO-A1-2016/147776
- JP-A- 2000 190 430
- JP-A- 2000 190 430
- JP-A- 2002 235 018
- JP-A- 2010 131 771
- JP-A- 2012 062 385

## Description

### Technical Field

The present invention relates to a hard coat laminated film. More specifically, the present invention relates to a hard coat laminated film excellent in abrasion resistance and surface appearance.

### Background Art

In recent years, touch panels, which are installed on an image display device such as a liquid crystal display, a plasma display and an electroluminescence display and enable input by touching with fingers, a pen or the like while watching displayed objects, have become popular.

For a display faceplate in a touch panel, articles using glass as the substrate have been conventionally used because they meet the required properties such as heat resistance, dimensional stability, high transparency, high surface hardness and high stiffness. On the other hand, glass has disadvantages such as a low impact resistance and consequent fragility; a low processability; difficulty in handling; a high specific weight and a consequent heavy weight; and difficulty in satisfying the demand for a curved or flexible display. Thus, materials as a substitute for glass are actively being studied, and many hard coat laminated films have been proposed in which a hard coat excellent in abrasion resistance is formed on the surface of a transparent resin film substrate formed of triacetylcellulose, polyethylene terephthalate, polycarbonate, polymethyl methacrylate, a norbornene polymer or the like (e.g., see Patent Literatures 1 and 2). However, the abrasion resistance is still insufficient in each of them. There has been required a hard coat laminated film which is not scratched even if repeatedly rubbed with steel wool or the like.

EP-A-3388237 describes a hard coat layered film having a first hard coat, a second hard coat, and a transparent resin film layer in order from an outer layer side, the first hard coat including (A) 100 parts by mass of a polyfunctional (meth)acrylate including 20% by mass or more of a tripentaerythritol acrylate, (B) 0.01-7 parts by mass of a water repellent, and (C) 0.01-10 parts by mass of a silane coupling agent, the first hard coat being formed from a coating material not including inorganic particles, and the second hard coat including (A') 100 parts by mass of a polyfunctional (meth)acrylate and (D) 50-300 parts by mass of inorganic fine particles having an average particle diameter of 1-300 nm. Component (A) may be a mixture of tripentaerythritol acrylate and one or more species selected from the group consisting of dipentaerythritol acrylate, monopentaerythritol acrylate, and polypentaerythritol acrylate.

JP-A-2000-190430 addresses the problem of providing an infrared cut-off film ensured in its transparency and enhanced in the adhesion of an infrared cut-off layer and a protective layer. An infrared cut-off layer and a protective layer are laminated on the surface of a base film in this order while a self-adhesive layer is laminated on the rear surface of the base film. A paint for the infrared cut-off layer prepared by mixing and dispersing a powder reflecting or absorbing infrared rays in an ultraviolet curable resin paint containing an erythritol/ acrylate polyfunctional monomer and a photopolymerization initiator is applied to the surface of the base film and cured to form the infrared cut-off layer, and a resin paint for the protective layer containing an ultraviolet curable resin containing the erythritol/acrylate polyfunctional monomer and the photopolymerization initiator is applied on the infrared cut-off layer and cured to form the protective layer.

EP-A-3150640 and WO 2015/182253 describe an actinic-ray-curable resin composition which comprises: (A) 100 parts by mass of a polyfunctional (meth)acrylate; (B) 0.2-4 parts by mass of a compound having an alkoxysilyl group and a (meth)acryloyl group; (C) 0.05-3 parts by mass of an organic titanium; and (D) 5-100 parts by mass of fine particles having an average particle diameter of 1-300 nm. Also described is a layered transparent resin product which comprises a hardcoat layer and a layer of a transparent resin sheet in this order from the outermost layer side, wherein the hardcoat has been formed from a coating material comprising:
(A) 100 parts by mass of a polyfunctional (meth)acrylate; (B) 0.2-4 parts by mass of a compound having an alkoxysilyl group and a (meth)acryloyl group; (C) 0.05-3 parts by mass of an organic titanium; and (D) 5-100 parts by mass of fine particles having an average particle diameter of 1-300 nm.

EP-A-2612756 describes a hard coat film being good in appearance, transparency, impact resistance, and scratch resistance or surface hardness. The hard coat film is formed by laminating a hard coating on at least one surface of a substrate film. The substrate film includes a polymer (C) including a first repeating unit derived from a di(meth)acrylate (A) and a second repeating unit derived from a mono(meth)acrylate (B), wherein the first repeating unit derived from the di(meth)acrylate (A) is represented by the formula: 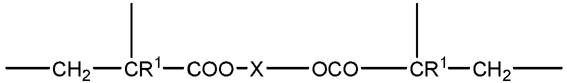 In the formula, X represents at least one diol residue with a number-average molecular weight of 500 or more selected from polyalkylene glycol residues, polyester diol residues and polycarbonate diol residues, and R₁ represents H or CH₃.

JP-A-2002-235018 addresses the problem of obtaining a photosensitive resin composition capable of being cured by radioactive rays, having good adhesion to a plastic, usable for a thick film coating because of little curling properties, hardly causing crack and suitable for hard coat, and further to prepare a film having the cured film thereof. The disclosed photosensitive resin composition for a hard coat agent is characterized in that the composition contains (A) a (meth)acrylic ester mixture of a reaction product of (meth)acrylic acid with a mixture of (a) dipentaerythritol, (b) tripentaerythritol, (c) tetrapentaerythritol and a pentaerythritol as an optional component, and (B) a photopolymerization initiator.

### Citation List

### Patent Literature

Patent Literature 1: JP-A-2013-208896
Patent Literature 2: JP-A-2012-062385
Patent Literature 3: JP-A-2007-536409

### Summary of Invention

### Technical Problem

An object of the present invention is to provide a hard coat laminated film excellent in abrasion resistance and surface appearance.

### Solution to Problem

As a result of intensive studies, the present inventor has found that the above object can be achieved by a hard coat laminated film having a specific configuration.

That is, aspects of the present invention are as follows:
[1] A hard coat laminated film comprising, in order from a surface layer side, a first hard coat and a transparent resin film layer,
   wherein the first hard coat is formed by a coating material comprising:
      (A) 100 parts by mass of a multifunctional (meth)acrylate comprising 20 mass% or more of tripentaerythritol acrylate; and
      (B) 0.01 to 7 parts by mass of a (meth)acryloyl group-containing fluoropolyether water repellent based on 100 parts by mass of component (A);
   wherein the first hard coat contains less than 1 part by mass of inorganic particles based on 100 parts by mass of component (A);
   wherein the thickness of the first hard coat is more than 5 µm and 60 µm or less;
   wherein the hard coat lamination film has a yellowness index of 3 or less; and
   wherein the hard coat laminated film has a total light transmittance of 85% or more, as measured with a turbidimeter in accordance with JIS K7361-1:1997.
[2] The hard coat laminated film according to [1], wherein the thickness of the first hard coat ranges from 8 to 60 µm.
[3] The hard coat laminated film according to [1] or [2] satisfying the following property (i):
   (i) the hard coat laminated film is placed on a Gakushin-type tester in accordance with JIS L 0849:2013 so that the first hard coat is on the surface side, a steel wool of #0000 is attached to a rubbing finger of the Gakushin-type tester, a load of 500 g is then applied, the surface of the first hard coat is reciprocatingly rubbed 9000 times, and when the rubbed portion is visually observed, no scratch is found.
[4] The hard coat laminated film according to any one of [1] to [3], wherein the transparent resin film is a transparent multilayer film with
   a first poly(meth)acrylimide resin layer (α1);
   an aromatic polycarbonate resin layer (β); and
   a second poly(meth)acrylimide resin layer (α2) directly laminated in this order.
[5] The hard coat laminated film according to any one of [1] to [4], wherein the (A) multifunctional (meth)acrylate comprising 20 mass% or more of tripentaerythritol acrylate is a mixture of
   tripentaerythritol acrylate; and
   at least one selected from the group consisting of dipentaerythritol acrylate, monopentaerythritol acrylate, and polypentaerythritol acrylate.
[6] The hard coat laminated film according to any one of [1] to [5],
   wherein the hard coat laminated film comprises, in order from the surface layer side, the first hard coat, the transparent resin film layer, and a second hard coat,
   wherein the second hard coat is formed from a coating material comprising:
      (A) 100 parts by mass of a multifunctional (meth)acrylate comprising 20 mass % or more of tripentaerythritol acrylate; and
      (C) 0.01 to 10 parts by mass of a leveling agent based on 100 parts by mass of component (A).
[7] Use of the hard coat laminated film according to any one of [1] to [6] for a member in an image display device.
[8] An image display device comprising the hard coat laminated film according to any one of [1] to [6].

### Advantageous Effects of Invention

The hard coat laminated film of the present invention is excellent in abrasion resistance and surface appearance. Therefore, the hard coat laminated film can be suitably used for a member in an image display device such as a liquid crystal display, a plasma display and an electroluminescence display (including an image display device with a touch panel function and an image display device with no touch panel function), particularly for a display faceplate in an image display device with a touch panel function.

### Brief Description of Drawings

[Fig. 1] Fig. 1 is a cross-sectional view showing an example of a hard coat laminated film of the present invention.
[Fig. 2] Fig. 2 is a diagram for describing a radius of curvature.
[Fig. 3] Fig. 3 is a conceptual diagram of a film forming apparatus used in Examples.
[Fig. 4] Fig. 4 is a conceptual diagram of a UV irradiator used in Examples.

### Description of Embodiments

The hard coat laminated film of the present invention comprises a first hard coat and a transparent resin film layer in order from a surface layer side.

### First hard coat

The first hard coat usually constitutes the surface of the hard coat laminated film of the present invention. In the case where the hard coat laminated film of the present invention is used for a display faceplate in an image display device with a touch panel function, the first hard coat functions as a touch surface. The first hard coat exhibits satisfactory scratch resistance and functions to prevent scratching even if repeatedly rubbed with steel wool or the like.

The first hard coat is formed from a coating material comprising: (A) 100 parts by mass of a multifunctional (meth)acrylate comprising 20 mass% or more of tripentaerythritol acrylate; and (B) 0.01 to 7 parts by mass of a (meth)acryloyl group-containing fluoropolyether based water repellent, and not containing inorganic particles.

The inorganic particles (e.g., silica (silicon dioxide); metal oxide particles formed of aluminum oxide, zirconia, titania, zinc oxide, germanium oxide, indium oxide, tin oxide, indium tin oxide, antimony oxide, cerium oxide or the like; metal fluoride particles formed of magnesium fluoride, sodium fluoride or the like; metal sulfide particles; metal nitride particles; and metal particles) are highly effective in enhancing the hardness of a hard coat. On the other hand, the weak interaction between inorganic particles and a resin component such as component (A) results in an insufficient abrasion resistance. Thus, in the present invention, the first hard coat is formulated so as not to contain inorganic particles.

Here, "not containing" inorganic particles means not containing a significant amount of inorganic particles. In the field of coating materials for forming a hard coat, the significant amount of inorganic particles is typically about 1 part by mass or more based on 100 parts by mass of component (A). Therefore, "not containing" inorganic particles is represented as follows: the amount of inorganic particles is 0 part by mass or more and less than 1 part by mass, preferably 0.1 part by mass or less and more preferably 0.01 part by mass or less based on 100 parts by mass of component (A).

### (A) Multifunctional (meth)acrylate comprising 20 mass% or more of tripentaerythritol acrylate

The multifunctional (meth)acrylate comprising 20 mass% or more of a tripentaerythritol acrylate of component (A) is a (meth)acrylate having two or more (meth)acryloyl groups in one molecule, wherein the (meth)acrylate having two or more (meth)acryloyl groups in one molecule comprises tripentaerythritol acrylate in an amount of 20 mass% or more, preferably 40 mass% or more and more preferably 50 mass% or more. Component (A) may comprise tripentaerythritol acrylate in an amount of 100 mass% or less, or less than 100 mass%, or 90 mass% or less, or 80 mass% or less. Here, the mass ratio of tripentaerythritol acrylate is based on 100 mass% of the sum of components (A). The term (meth)acrylate herein means acrylate or methacrylate. Since component (A) has two or more (meth)acryloyl groups in one molecule, it serves to form a hard coat through polymerization/curing with an active energy ray such as a UV ray and an electron beam.

Component (A) is more preferably a mixture of tripentaerythritol acrylate and at least one selected from the group consisting of dipentaerythritol acrylate, monopentaerythritol acrylate, and polypentaerythritol acrylate. Here, the content of tripentaerythritol acrylate in the above mixture is 20 mass% or more, preferably 40 mass% or more, and more preferably 50 to 80 mass%, assuming that the sum of the respective components is 100 mass%. In another embodiment, the content of tripentaerythritol acrylate in the above mixture may be 20 to 80 mass% or 40 to 80 mass%, assuming that the sum of the respective components is 100 mass%.

The tripentaerythritol acrylate is a compound having a structure in which three pentaerythritol acrylates are linked, and has 8 or 7 (when a hydroxyl group remains at a terminal end) acryloyl groups. That is, the tripentaerythritol acrylate refers to tripentaerythritol heptaacrylate, tripentaerythritol octaacrylate, or a mixture thereof (mass ratio 0:100 to 100:0). The general structure of multifunctional pentaerythritol acrylate is shown in the following formula (1). Here, n is an integer of 0 or more, and R is -H or -COCH=CH₂. Although a molar ratio of -H:-COCH=CH₂ in R is not particularly limited, it is usually from 40:60 to 80:20 from a viewpoint of optimization of viscosity of a coating material to be obtained, more typically may be from 50:50 to 70:30. When n = 2 in the following formula (1), tripentaerythritol heptaacrylate or tripentaerythritol octaacrylate is represented.

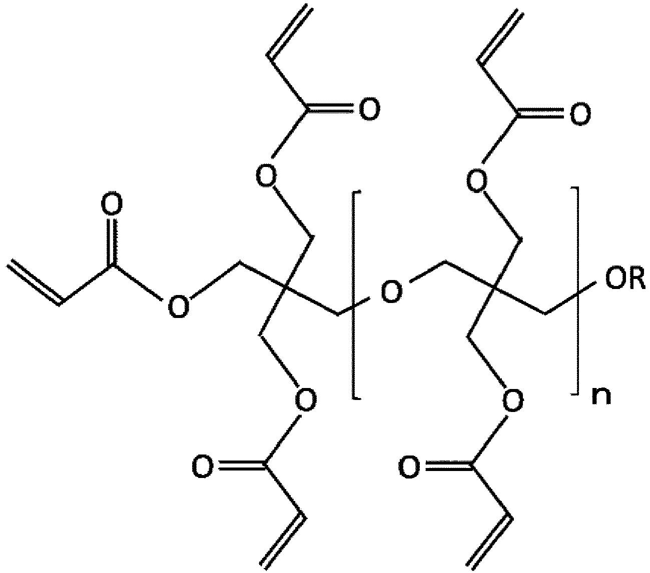

The dipentaerythritol acrylate is a compound having a structure in which two pentaerythritol acrylates are linked, and has 6 or 5 (when a hydroxyl group remains at a terminal end) acryloyl groups (n = 1).

The monopentaerythritol acrylate has 4 or 3 (when a hydroxyl group remains at a terminal end) acryloyl groups (n = 0).

The polypentaerythritol acrylate is a compound having a structure in which four or more pentaerythritol acrylates are linked. Assuming that the number of linkages is N (= n + 1), the polypentaerythritol acrylate has (2N + 2) or (2N + 1) (when a hydroxyl group remains at a terminal end) acryloyl groups. Although the upper limit of N is theoretically not particularly limited, it may be usually 6 or less from viewpoints of optimization of viscosity of a coating material containing this compound and the possibility of actual synthesis.

Component (A) may comprise other multifunctional (meth)acrylates besides tripentaerythritol acrylate, dipentaerythritol acrylate, monopentaerythritol acrylate, and polypentaerythritol acrylate. Although such other multifunctional (meth)acrylates are not particularly limited, examples thereof may include (meth)acryloyl group-containing bifunctional reactive monomers such as diethylene glycol di(meth)acrylate, neopentyl glycol di(meth)acrylate, 1,6-hexanediol di(meth)acrylate, polyethylene glycol di(meth)acrylate, 2,2'-bis(4-(meth)acryloyloxypolyethyleneoxyphenyl)propane and 2,2'-bis(4-(meth)acryloyloxypolypropyleneoxyphenyl)propane; (meth)acryloyl group-containing trifunctional reactive monomers such as trimethylolpropane tri(meth)acrylate, trimethylolethane tri(meth)acrylate and ethoxylated trimethylolpropane tri(meth)acrylate; (meth)acryloyl group-containing tetrafunctional reactive monomers such as ditrimethylol propane tetra (meth)acrylate and pentaerythritol tetra(meth)acrylate; (meth)acryloyl group-containing hexafunctional reactive monomers such as dipentaerythritol hexaacrylate; and polymers (oligomers and prepolymers) comprised of one or more of them as constituent monomers. For the other polyfunctional (meth)acrylates, one or a mixture of two or more of these illustrated compounds can be used.

### (B) (Meth)acryloyl group-containing fluoropolyether based water repellent

Component (B) is a water repellent comprising a compound containing a (meth)acryloyl group and a fluoropolyether group in the molecule. Component (B) is clearly distinguished from component (A) in that it contains a fluoropolyether group in the molecule. The multifunctional (meth)acrylate included in component (A) does not contain a fluoropolyether group in the molecule. Herein, a compound containing two or more (meth)acryloyl groups and containing a fluoropolyether group in one molecule is classified into component (B).

The (meth)acryloyl group-containing fluoropolyether based water repellent as component (B) serves to enhance the abrasion resistance, the finger slidability, the resistance to stain or fouling, and the wipeability against stain. Since component (B) has a (meth)acryloyl group in the molecule, it is chemically bonded with component (A) or strongly interacts with component (A), and troubles such as bleeding out are suppressed. Preferred for component (B) is an admixture of an acryloyl group-containing fluoropolyether based water repellant and a methacryloyl group-containing fluoropolyether based water repellant from a viewpoint of appropriately controlling the chemical bond or the interaction between component (A) and component (B) to allow to exhibit a good water repellency while keeping the transparency high.

The amount of the (meth)acryloyl group-containing fluoropolyether based water repellent as component (B) to be blended is 7 parts by mass or less, preferably 4 parts by mass or less, and more preferably 2 parts by mass or less based on 100 parts by mass of component (A) from a viewpoint of preventing troubles such as the bleeding out of component (B). At the same time, the amount of the (meth)acryloyl group-containing fluoropolyether based water repellent as component (B) to be blended is 0.01 part by mass or more, preferably 0.05 parts by mass or more, and more preferably 0.1 part by mass or more from a viewpoint of obtaining the effect of use thereof. The amount of the water repellent to be blended is 0.01 part by mass or more and 7 parts by mass or less, preferably 0.01 part by mass or more and 4 parts by mass or less, or 0.01 part by mass or more and 2 parts by mass or less, or preferably 0.05 parts by mass or more and 7 parts by mass or less, or 0.05 parts by mass or more and 4 parts by mass or less, or 0.05 parts by mass or more and 2 parts by mass or less, or preferably 0.1 part by mass or more and 7 parts by mass or less, or 0.1 part by mass or more and 4 parts by mass or less, or 0.1 part by mass or more and 2 parts by mass or less.

It is preferable that the coating material for forming the first hard coat further comprises a compound having two or more isocyanate groups (-N=C=O) in one molecule and/or a photopolymerization initiator from a viewpoint of improved curability with an active energy ray.

Examples of the compound having two or more isocyanate groups in one molecule may include methylenebis-4-cyclohexylisocyanate; polyisocyanates such as a trimethylolpropane adduct form of tolylene diisocyanate, a trimethylolpropane adduct form of hexamethylene diisocyanate, a trimethylolpropane adduct form of isophorone diisocyanate, an isocyanurate form of tolylene diisocyanate, an isocyanurate form of hexamethylene diisocyanate, an isocyanurate form of isophorone diisocyanate and a biuret form of hexamethylene diisocyanate; and urethane crosslinking agents such as blocked isocyanates of the polyisocyanates. One of them or a mixture of two or more thereof can be used for the compound having two or more isocyanate groups in one molecule. In crosslinking, a catalyst such as dibutyltin dilaurate and dibutyltin diethylhexoate may be added as necessary.

Examples of the photopolymerization initiator may include benzophenone compounds such as benzophenone, methyl-o-benzoyl benzoate, 4-methylbenzophenone, 4,4'-bis(diethylamino)benzophenone, methyl o-benzoylbenzoate, 4-phenylbenzophenone, 4-benzoyl-4'-methyldiphenyl sulfide, 3,3',4,4'-tetra(tert-butylperoxycarbonyl)benzophenone and 2,4,6-trimethylbenzophenone; benzoin compounds such as benzoin, benzoin methyl ether, benzoin ethyl ether, benzoin isopropyl ether and benzyl methyl ketal; acetophenone compounds such as acetophenone, 2,2-dimethoxy-2-phenylacetophenone and 1-hydroxycyclohexyl phenyl ketone; anthraquinone compounds such as methylanthraquinone, 2-ethylanthraquinone and 2-amylanthraquinone; thioxanthone compounds such as thioxanthone, 2,4-diethylthioxanthone and 2,4-diisopropylthioxanthone; alkylphenone compounds such as acetophenone dimethyl ketal; triazine compounds; biimidazole compounds; acylphosphine oxide compounds; titanocene compounds; oxime ester compounds; oxime phenylacetate compounds; hydroxyketone compounds; and aminobenzoate compounds. One of them or a mixture of two or more thereof can be used for the photopolymerization initiator.

As the photopolymerization initiator, it is preferable to combinedly use two or more acetophenone-based photopolymerization initiators, for example, both 1-hydroxycyclohexyl phenyl ketone and 2-hydroxy-1-(4-(4-(2-hydroxy-2-methyl-propionyl)-benzyl)phenyl)-2-methyl-propan-1-one. Such a combined use makes it possible to sufficiently cure a hard coat while suppressing coloration of the hard coat.

The coating material for forming the first hard coat may comprise one or two or more of additives such as an antistatic agent, a surfactant, a leveling agent, a thixotropy-imparting agent, an antifouling agent, a printability improver, an antioxidant, a weatherability stabilizer, a light resistance stabilizer, a UV absorber, a heat stabilizer, organic fine particles and an organic colorant, as desired.

The coating material for forming the first hard coat may comprise a solvent as desired for dilution to a concentration which allows easy application. The solvent is not particularly limited as long as the solvent neither reacts with any of components (A) and (B) and other optional components nor catalyzes (promotes) the self-reaction (including degradation reaction) of these components. Examples of the solvent may include 1-methoxy-2-propanol, ethyl acetate, n-butyl acetate, toluene, methyl ethyl ketone, methyl isobutyl ketone, diacetone alcohol and acetone. One of them or a mixture of two or more thereof can be used for the solvent.

The coating material for forming the first hard coat can be obtained by mixing and stirring these components.

The method for forming the first hard coat using the coating material for forming the first hard coat is not particularly limited, and any known web coating method can be used. Examples of the above method include roll coating, gravure coating, reverse coating, roll brushing, dip coating, spray coating, spin coating, air knife coating and die coating.

The thickness of the first hard coat is more than 5 µm, preferably 7 µm or more, more preferably 8 µm or more, and still more preferably 9 µm or more from a viewpoint of abrasion resistance. At the same time, the thickness of the first hard coat is 60 µm or less, preferably 30 µm or less, more preferably 20 µm or less, and still more preferably 15 µm or less from a viewpoint of keeping the bending resistance of the hard coat laminated film of the present invention good and allowing easy handling as a film roll.

In addition, the thickness of the first hard coat is more than 5 µm and 60 µm or less, preferably more than 5 µm and 30 µm or less, or more than 5 µm and 20 µm or less, or more than 5 µm and 15 µm or less, or 7 µm or more and 60 µm or less, or 7 µm or more and 30 µm or less, or 7 µm or more and 20 µm or less, or 7 µm or more and 15 µm or less, or 8 µm or more and 60 µm or less, or 8 µm or more and 30 µm or less, or 8 µm or more and 20 µm or less, or 8 µm or more and 15 µm or less, or 9 µm or more and 60 µm or less, or 9 µm or more and 30 µm or less, or 9 µm or more and 20 µm or less, or 9 µm or more and 15 µm or less.

### Second hard coat

The hard coat laminated film of the present invention preferably comprises a first hard coat, a transparent resin film layer, a second hard coat in order from the surface layer side. The second hard coat formed will allow a force to curl the hard coat laminated film in one direction (hereinafter, occasionally abbreviated as a curling force) and a force to curl the hard coat laminated film in the opposite direction to work simultaneously. Then, the occurrence of curling can be suppressed by allowing these two curling forces to be canceled to be zero.

In recent years, a touch panel has been proposed which has a bilayer structure in which a touch sensor is directly provided on the back side of a display faceplate for the purpose of weight reduction of an image display device (so-called one-glass-solution). In addition, one-plastic-solution to substitute for the so-called one-glass-solution has also been proposed for the purpose of further weight reduction. In the case where the hard coat laminated film of the present invention is used for the one-plastic-solution to substitute for the so-called one-glass-solution, the second hard coat formed allows the hard coat laminated film to easily have properties suitable for a printed surface.

The second hard coat is not particularly limited and can be formed by any method using any coating material.

Preferably, the second hard coat is formed from a coating material comprising (A) 100 parts by mass of a multifunctional (meth)acrylate comprising 20 mass% or more of tripentaerythritol acrylate; and (C) 0.01 to 10 parts by mass of a leveling agent from a viewpoint of curling resistance.

The multifunctional (meth)acrylate comprising 20 mass% or more of a tripentaerythritol acrylate as component (A) has been described above in the description of the coating material for forming the first hard coat. One of them or a mixture of two or more thereof can be used for component (A). As component (A) for the second hard coat, from a viewpoint of curling resistance, the same as that used in the coating material for forming the first hard coat is more preferable.

### (C) Leveling agent

The coating material for forming the second hard coat preferably comprises a leveling agent from a viewpoint of smoothing the surface of the second hard coat.

Examples of the leveling agent may include acrylic leveling agents, silicone leveling agents, fluorine-containing leveling agents, silicone-acrylic copolymer leveling agents, fluorine-modified acrylic leveling agents, fluorine-modified silicone leveling agents, and leveling agents into which a functional group (e.g., an alkoxy group such as a methoxy group and an ethoxy group, an acyloxy group, a halogen group, an amino group, a vinyl group, an epoxy group, a methacryloxy group, an acryloxy group and an isocyanate group) is introduced. Among them, acrylic leveling agents and silicone-acrylic copolymer leveling agents are preferred for the leveling agent as component (C) from a viewpoint of printability. One of them or a mixture of two or more thereof can be used for the leveling agent as component (C).

The amount of the leveling agent as component (C) to be blended is typically 0.01 part by mass or more, preferably 0.1 part by mass or more, and more preferably 0.2 parts by mass or more based on 100 parts by mass of component (A) from a viewpoint of smoothing the surface of the second hard coat. At the same time, the amount of the leveling agent as component (C) to be blended may be typically 10 parts by mass or less, preferably 7 parts by mass or less, more preferably 4 parts by mass or less, and still more preferably 2 parts by mass or less from a viewpoint of preventing troubles such as the bleeding out of component (C).

The amount of the leveling agent as component (C) to be blended may be typically 0.01 part by mass or more and 10 parts by mass or less, and preferably 0.01 part by mass or more and 7 parts by mass or less, or 0.01 part by mass or more and 4 part by mass or less, or 0.01 part by mass or more and 2 parts by mass or less, or preferably 0.1 part by mass or more and 10 parts by mass or less, or 0.1 part by mass or more and 7 parts by mass or less, or 0.1 part by mass or more and 4 parts by mass or less, or 0.1 part by mass or more and 2 parts by mass or less, or preferably 0.2 parts by mass or more and 10 parts by mass or less, or 0.2 parts by mass or more and 7 parts by mass or less, or 0.2 parts by mass or more and 4 parts by mass or less, or 0.2 parts by mass or more and 2 parts by mass or less.

It is preferable that the coating material for forming the second hard coat further comprises a compound having two or more isocyanate groups (-N=C=O) in one molecule and/or a photopolymerization initiator from a viewpoint of improved curability with an active energy ray.

The compound having two or more isocyanate groups in one molecule has been described above in the description of the coating material for forming the first hard coat. One of them or a mixture of two or more thereof can be used for the compound having two or more isocyanate groups in one molecule.

The photopolymerization initiator has been described above in the description of the coating material for forming the first hard coat. One of them or a mixture of two or more thereof can be used for the photopolymerization initiator.

The coating material for forming the second hard coat may comprise one or two or more of additives such as an antistatic agent, a surfactant, a thixotropy-imparting agent, an antifouling agent, a printability improver, an antioxidant, a weatherability stabilizer, a light resistance stabilizer, a UV absorber, a heat stabilizer, a colorant, inorganic fine particles, and organic fine particles, as desired.

The coating material for forming the second hard coat may comprise a solvent as desired for dilution to a concentration which allows easy application. The solvent is not particularly limited as long as the solvent neither reacts with any of components (A) and (C) and other optional components nor catalyzes (promotes) the self-reaction (including degradation reaction) of these components. Examples of the solvent may include 1-methoxy-2-propanol, ethyl acetate, n-butyl acetate, toluene, methyl ethyl ketone, methyl isobutyl ketone, diacetone alcohol and acetone. Among them, 1-methoxy-2-propanol is preferred. One of them or a mixture of two or more thereof can be used for the solvent.

The coating material for forming the second hard coat can be obtained by mixing and stirring these components.

The method for forming the second hard coat using the coating material for forming the second hard coat is not particularly limited, and known web coating methods can be used. Examples of the above method may include roll coating, gravure coating, reverse coating, roll brushing, dip coating, spray coating, spin coating, air knife coating and die coating.

The thickness of the second hard coat, although not particularly limited, may be typically 60 µm or less, preferably 30 µm or less, more preferably 20 µm or less, and still more preferably 15 µm or less from a viewpoint of bending resistance. The thickness of the second hard coat may be typically 5 µm or more, preferably 7 µm or more, more preferably 8 µm or more, and still more preferably 9 µm or more.

In addition, the thickness of the second hard coat may be preferably 5 µm or more and 60 µm or less, or 5 µm or more and 30 µm or less, or 5 µm or more and 20 µm or less, or 5 µm or more and 15 µm or less, or 7 µm or more and 60 µm or less, or 7 µm or more and 30 µm or less, or 7 µm or more and 20 µm or less, or 7 µm or more and 15 µm or less, or 8 µm or more and 60 µm or less, or 8 µm or more and 30 µm or less, or 8 µm or more and 20 µm or less, or 8 µm or more and 15 µm or less, or 9 µm or more and 60 µm or less, or 9 µm or more and 30 µm or less, or 9 µm or more and 20 µm or less, or 9 µm or more and 15 µm or less.

The thickness of the second hard coat may be the same as the thickness of the first hard coat from a viewpoint of curling resistance.

Here, "the same thickness" should not be interpreted as completely the same thickness in the physicochemically strict sense; but should be interpreted as the same thickness within a variation in a process/quality control commonly performed in industry. The reason is that curling resistance can be improved if the thickness is the same thickness within a variation in a process/quality control commonly performed in industry. The thickness of the hard coat (after curing) is typically subjected to a process/quality control within a variation of about -0.5 to +0.5 µm, and therefore the thickness of 10 µm and the thickness of 11 µm should be interpreted to be identical. "The same thickness" here can be paraphrased as "substantially the same thickness".

### Transparent resin film

The transparent resin film is a layer functioning as a transparent film substrate for forming the first hard coat, or the first hard coat and the second hard coat thereabove. Any transparent resin film can be used for the transparent resin film without limitation as long as it has a high transparency and no coloring. Examples of the transparent resin film may include films formed of a cellulose ester resin such as triacetylcellulose; a polyester resin such as polyethylene terephthalate; a cyclic hydrocarbon resin such as an ethylene-norbornene copolymer; an acrylic resin such as polymethyl methacrylate, polyethyl methacrylate, and vinylcyclohexane/(meth)acrylic acid methyl copolymer; an aromatic polycarbonate resin; a polyolefin resin such as polypropylene and 4-methyl-penten-1; a polyamide resin; a polyarylate resin; a polymer-type urethane acrylate resin; and a polyimide resin. The transparent resin film encompasses cast films, uniaxially oriented films and biaxially oriented films of these films. Further, the transparent resin film encompasses laminated films with one or two or more types of these films in two or more layers.

The thickness of the transparent resin film, which is not particularly limited, can be any thickness as desired. The thickness of the transparent resin film may be typically 20 µm or more and preferably 50 µm or more from a viewpoint of the handleability of the hard coat laminated film of the present invention. In the case where the hard coat laminated film of the present invention is used for a display faceplate in a touch panel, the thickness of the transparent resin film may be typically 100 µm or more, preferably 200 µm or more, and more preferably 300 µm or more from a viewpoint of retaining the stiffness. Further, the thickness of the transparent resin film may be typically 1500 µm or less, preferably 1200 µm or less, and more preferably 1000 µm or less from a viewpoint of meeting the requirement for a thinner touch panel. In applications in which a high stiffness is not required other than a display faceplate in a touch panel, the thickness of the transparent resin film may be typically 250 µm or less and preferably 150 µm or less from a viewpoint of economic efficiency.

The transparent resin film is preferably a transparent resin film of an acrylic resin. The term "acrylic resin" referred to herein includes acrylic resins and methacrylic resins.

Examples of the acrylic resin may include a (meth)acrylate (co)polymer, a copolymer mainly composed of a structural unit derived from a (meth)acrylic acid ester (typically 50 mol% or more, preferably 65 mol% or more, more preferably 70 mol% or more), and modified products thereof. The term (meth)acrylic means acrylic or methacrylic. The term (co)polymer means a polymer or a copolymer.

Examples of the (meth)acrylate (co)polymer may include a polymethyl (meth)acrylate, a polyethyl (meth)acrylate, a polypropyl (meth)acrylate, a polybutyl (meth)acrylate, a methyl (meth)acrylate-butyl (meth)acrylate copolymer, and an ethyl (meth)acrylate-butyl (meth)acrylate copolymer.

Examples of the copolymer mainly composed of a structural unit derived from a (meth)acrylic acid ester may include an ethylene-methyl (meth)acrylate copolymer, a styrene-methyl (meth)acrylate copolymer, a vinyl cyclohexane-methyl (meth)acrylate copolymer, a maleic anhydride-methyl (meth)acrylate copolymer, and an N-substituted maleimide-methyl (meth)acrylate copolymer.

Examples of the modified product may include a polymer into which a lactone ring structure is introduced by an intramolecular cyclization reaction; a polymer into which glutaric anhydride is introduced by an intramolecular cyclization reaction; and a polymer into which an imide structure is introduced by a reaction with an imidating agent (e.g., methylamine, cyclohexylamine, or ammonia) (hereinafter referred to as a poly (meth)acrylimide resin).

Examples of the transparent resin film of the acrylic resin may include a film of one of these resins, or a film of a mixture of two or more thereof. Further, the transparent resin film of the acrylic resin encompasses laminated films with one type or two or more types of these films in two or more layers.

The transparent resin film is more preferably a film of a vinyl cyclohexane-methyl (meth)acrylate copolymer. The vinyl cyclohexane-methyl (meth)acrylate copolymer here is a copolymer formed from methyl (meth)acrylate and vinylcyclohexane as polymerizable monomers, or a copolymer formed from methyl (meth)acrylate and vinylcyclohexane and a monomer copolymerizable with them. Here, the copolymerizable monomer is usually a compound having a carbon-carbon double bond, and is typically a compound having an ethylenic double bond. Using such a transparent resin film allows the hard coat laminated film to be excellent in surface hardness, abrasion resistance, transparency, surface smoothness, appearance, stiffness, and moisture resistance, and as a result the hard coat laminated film can be suitably used for a display faceplate in a touch panel. The content of the structural unit derived from methyl (meth)acrylate in the vinyl cyclohexane-methyl (meth)acrylate copolymer may be typically 50 to 95 mol%, preferably 65 to 90 mol%, and more preferably 70 to 85 mol%, assuming that the sum of structural units derived from all polymerizable monomers (methyl (meth)acrylate, vinyl cyclohexane, and (if present) a monomer copolymerizable with them) is 100 mol%.

In another preferred embodiment, the transparent resin film may be a poly(meth)acrylimide resin film. Using such a transparent resin film allows the hard coat laminated film to be excellent in surface hardness, abrasion resistance, transparency, surface smoothness, appearance, stiffness, heat resistance, and dimensional stability under heat, and as a result the hard coat laminated film can be suitably used for a display faceplate in a touch panel and a transparent conductive substrate.

The acrylic resin has a yellowness index of preferably 3 or less, more preferably 2 or less, and still more preferably 1 or less (measured with a colorimeter "SolidSpec-3700 (trade name)" available from Shimadzu Corporation in accordance with JIS K7105:1981). Using the acrylic resin having a yellowness index of 3 or less can result in a hard coat laminated film which can be suitably used for a member in an image display device. A smaller yellowness index is more preferred.

The melt mass flow rate (measured under conditions of 260°C and 98.07 N according to ISO 1133) of the acrylic resin is preferably 0.1 to 20 g/10 min and more preferably 0.5 to 10 g/10 min from a viewpoint of extrusion load and stability of a melted film.

The acrylic resin can further comprise, within a range that is not contrary to the object of the present invention, a thermoplastic resin other than the acrylic resin; a pigment, an inorganic filler, an organic filler, a resin filler; an additive such as, a lubricant, an antioxidant, a weatherability stabilizer, a heat stabilizer, a releasing agent, an antistatic agent and a surfactant, as desired. The amount of the optional component(s) to be blended is typically about 0.01 to 10 parts by mass based on 100 parts by mass of the acrylic resin.

The transparent resin film is preferably a transparent multilayer film with a first acrylic resin layer (α1); an aromatic polycarbonate resin layer (β); and a second acrylic resin layer (α2) directly laminated in this order. The present invention is herein described under the assumption that a touch surface is formed on the α1 layer side.

Acrylic resin is excellent in surface hardness but often insufficient in cutting processability. On the other hand, aromatic polycarbonate resin is excellent in cutting processability but often insufficient in surface hardness. Therefore, using a transparent multilayer film having the above-described layer configuration enables to easily achieve a hard coat laminated film in which both substances cover for each other's drawbacks and which is excellent in both of surface hardness and cutting processability.

The layer thickness of the α1 layer, although not particularly limited, may be typically 20 µm or more, preferably 40 µm or more, more preferably 60 µm or more, and still more preferably 80 µm or more from a viewpoint of the surface hardness of the hard coat laminated film of the present invention.

The layer thickness of the α2 layer, although not particularly limited, is preferably the same layer thickness as the α1 layer from a viewpoint of the curling resistance of the hard coat laminated film of the present invention.

Here, "the same layer thickness" should not be interpreted as the same layer thickness in the physicochemically strict sense; but should be interpreted as the same layer thickness within a variation in a process/quality control commonly performed in industry. The reason is that the curling resistance of a multilayer film can be kept good if the layer thickness is the same layer thickness within a variation in a process/quality control commonly performed in industry. A cast multilayer film obtained by a T-die coextrusion method is typically subjected to a process/quality control within a variation of about -5 to +5 µm, and therefore the layer thickness of 65 µm and the layer thickness of 75 µm should be interpreted to be identical. "The same layer thickness" here can be paraphrased as "substantially the same layer thickness".

The layer thickness of the β layer, although not particularly limited, may be typically 20 µm or more and preferably 80 µm or more from a viewpoint of the cutting processability of the hard coat laminated film of the present invention.

The acrylic resin to be used for the α1 layer and the α2 layer has been described above.

For the acrylic resin to be used for the α1 layer and the acrylic resin to be used for the α2 layer, acrylic resins different in resin properties, for example, acrylic resins different in type, melt mass flow rate, and glass transition temperature may be used. It is preferred to use acrylic resins having the same resin properties from a viewpoint of the curling resistance of the hard coat laminated film of the present invention. Using acrylic resins in the same grade and in the same lot is one of preferred embodiments, for example.

Examples of the aromatic polycarbonate resin to be used for the β layer include aromatic polycarbonate resins such as polymers obtained by an interfacial polymerization reaction of an aromatic dihydroxy compound such as bisphenol A, dimethyl bisphenol A and 1,1-bis(4-hydroxyphenyl)-3,3,5-trimethylcyclohexane with phosgene; and polymers obtained by a transesterification reaction of an aromatic dihydroxy compound such as bisphenol A, dimethyl bisphenol A and 1,1-bis(4-hydroxyphenyl)-3,3,5-trimethylcyclohexane with a carbonate diester such as diphenyl carbonate. One type or a mixture of two or more types of these resins can be used for the aromatic polycarbonate resin of the β layer.

Preferred examples of optional components which can be contained in the aromatic polycarbonate resin may include core-shell rubbers. Using 0 to 30 parts by mass of a core-shell rubber (100 to 70 parts by mass of the aromatic polycarbonate resin), preferably 0 to 10 parts by mass of a core-shell rubber (100 to 90 parts by mass of the aromatic polycarbonate resin) based on 100 parts by mass of the total amount of the aromatic polycarbonate resin and the core-shell rubber can further enhance the cutting processability and the impact resistance of a hard coat laminated film.

Examples of the core-shell rubber may include core-shell rubbers formed of a methacrylate-styrene/butadiene rubber graft copolymer, an acrylonitrile-styrene/butadiene rubber graft copolymer, an acrylonitrile-styrene/ethylene-propylene rubber graft copolymer, an acrylonitrile-styrene/acrylate graft copolymer, a methacrylate/acrylate rubber graft copolymer and a methacrylate-acrylonitrile/acrylate rubber graft copolymer. One type or a mixture of two or more types of them can be used for the core-shell rubber.

The aromatic polycarbonate resin may further comprise, within a range that is not contrary to the object of the present invention, a thermoplastic resin other than the aromatic polycarbonate resin or the core-shell rubber; a pigment, an inorganic filler, an organic filler, a resin filler; an additive such as a lubricant, an antioxidant, a weatherability stabilizer, a heat stabilizer, a releasing agent, an antistatic agent and a surfactant, as desired. The amount of the optional component(s) to be blended is typically about 0.01 to 10 parts by mass based on 100 parts by mass of the total amount of the aromatic polycarbonate resin and the core-shell rubber.

In a preferable embodiment, the transparent resin film may be a transparent multilayer film with a first poly(meth)acrylimide resin layer (α1); an aromatic polycarbonate resin layer (β); and a second poly(meth)acrylimide resin layer (α2) directly laminated in this order. Poly(meth)acrylimide resin is excellent in heat resistance and surface hardness but often insufficient in cutting processability. On the other hand, aromatic polycarbonate resin is excellent in cutting processability but often insufficient in heat resistance and surface hardness. Therefore, using a transparent multilayer film having the above-described layer configuration enables to easily achieve a hard coat laminated film in which both substances cover for each other's drawbacks and which is excellent in all of heat resistance, surface hardness and cutting processability.

A method for producing the transparent resin film is not particularly limited. As a preferable production method in the case where the transparent resin film is the transparent multilayer film with a first poly(meth)acrylimide resin layer (α1); an aromatic polycarbonate resin layer (β); and a second poly(meth)acrylimide resin layer (α2) directly laminated in this order, the method described in JP-A-2015-083370 can be mentioned. In forming the first hard coat and the second hard coat, an adhesion-facilitating treatment such as a corona discharge treatment and an anchor coat formation may be performed beforehand on the surface for forming the hard coat or both surfaces of the transparent resin film in order to enhance the adhesion strength to the hard coat.

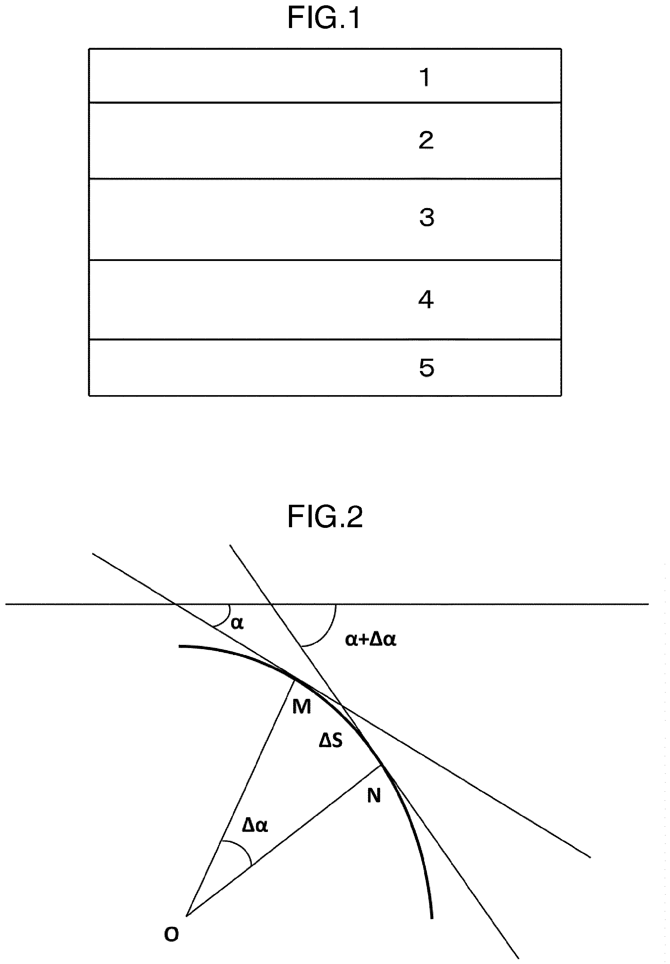

Fig. 1 is a conceptual cross-sectional view showing an example of the hard coat laminated film of the present invention. The hard coat laminated film comprises a first hard coat: 1, a first poly(meth)acrylimide resin layer (α1): 2, an aromatic polycarbonate resin layer (β): 3, a second poly(meth)acrylimide resin layer (α2): 4, and a second hard coat: 5 in order from a touch surface.

The hard coat laminated film of the present invention may have an optional layer(s) other than the first hard coat, the second hard coat, and the transparent resin film layer, as desired. Examples of the optional layer may include a third hard coat, an anchor coat layer, a pressure-sensitive adhesive layer, a transparent electroconductive layer, a high refractive index layer, a low refractive index layer, and a reflection-preventive layer. The third hard coat may have, for example, the same composition as the first hard coat or the second hard coat.

The hard coat laminated film of the present invention is placed on a Gakushin-type tester in accordance with JIS L 0849:2013 such that the first hard coat is on the surface side, and a steel wool of #0000 is attached to a rubbing finger of the Gakushin-type tester. Then, a load of 500 g is applied, and the surface of the first hard coat is reciprocatingly rubbed 9000 times under conditions that the moving speed of the rubbing finger is 300 mm/min and the moving distance is 30 mm. Then, when the rubbed portion is visually observed, it is preferable that no scratch is found. It is more preferable that no scratch is found after 10000 reciprocating rubbings. It is still more preferable that no scratch is found after 11000 reciprocating rubbings. It is even more preferable that no scratch is found after 12000 reciprocating rubbings. It is most preferable that no scratch is found after 13000 reciprocating rubbings. It is preferable that no scratch is found after the more number of times of rubbing. Due to such abrasion resistance of the hard coat laminated film of the present invention, the hard coat laminated film can be suitably used for a member in an image display device.

The hard coat laminated film of the present invention has a total light transmittance of 85% or more, preferably 88% or more, and more preferably 90% or more (measured with a turbidimeter "NDH 2000" (trade name) available from Nippon Denshoku Industries Co., Ltd. in accordance with JIS K7361-1:1997). Due to the total light transmittance being 85% or more, the hard coat laminated film of the present invention can be suitably used for a member in an image display device. A higher total light transmittance is more preferred.

The hard coat laminated film of the present invention has a minimum bending radius of preferably 70 mm or less, more preferably 60 mm or less, and still more preferably 50 mm or less. Due to the minimum bending radius being preferably 70 mm or less, the hard coat laminated film of the present invention can easily be handled as a film roll, so that this leads to an advantage in terms of production efficiency and the like. A smaller minimum bending radius is more preferred. Here, the minimum bending radius is a value determined by a test (v) in Examples described later. The minimum bending radius referred to herein is a bending radius immediately before the occurrence of a crack in the surface of a bending portion when a hard coat laminated film is bent, and indicates the limit against bending. Bending radius is defined in the same manner as for radius of curvature.

A radius of curvature is defined as follows in reference to Fig. 2. The length from the point M to the point N in the curve is denoted as ΔS; the difference between the slope of the tangent line at the point M and the slope of the tangent line at the point N as Δα; and the intersection of the line which is perpendicular to the tangent line at the point M and intersects with the tangent line at the point M and the line which is perpendicular to the tangent line at the point N and intersects with the tangent line at the point N, as O. In the case where ΔS is sufficiently small, the curve from the point M to the point N can be approximated to an arc (see Fig. 2). The radius in this case is defined as the radius of curvature. Further, the radius of curvature is denoted as R. Then, ∠MON = Δα. In the case where ΔS is sufficiently small, Δα is also sufficiently small and therefore ΔS = RΔα. As the result, R = ΔS/Δα.

In the hard coat laminated film of the present invention, the surface of the first hard coat has a water contact angle of preferably 95° or more, more preferably 100° or more, and still more preferably 105° or more. In the case where the hard coat laminated film of the present invention is used for a display faceplate in a touch panel, the first hard coat will function as a touch surface. The water contact angle on the surface of the first hard coat of 95° or more enables to operate a touch panel at will by sliding fingers or a pen on the touch surface. From a viewpoint of sliding fingers or a pen at will, a higher water contact angle is more preferred. The upper limit of the water contact angle is not particularly limited and about 120° is typically adequate. Here, the water contact angle is a value determined by a test (vi) in Examples described later.

In the hard coat laminated film of the present invention, the water contact angle of the surface of the first hard coat after wipes with a cotton is preferably 95° or more, more preferably 100° or more, and still more preferably 105° or more after preferably 20000 cycles of reciprocation and more preferably 25000 cycles of reciprocation. The water contact angle after 20000 reciprocating wipes with a cotton of 95° or more enables to maintain the surface properties such as finger slidability even after repeated wipes with a handkerchief or the like. For the number of wipes with a cotton during which a water contact angle of 95° or more can be maintained, a larger number is more preferred. Here, the water contact angle after wipes with a cotton is a value determined by a test (vii) in Examples described later.

The hard coat laminated film of the present invention has a yellowness index of 3 or less, preferably 2 or less, and more preferably 1 or less (measured with a colorimeter "SolidSpec-3700" (trade name) available from Shimadzu Corporation in accordance with JIS K7105:1981). A smaller yellowness index is more preferred. Due to the yellowness index being 3 or less, the hard coat laminated film of the present invention can be suitably used for a member in an image display device.

The hard coat laminated film of the present invention is placed on a Gakushin-type tester in accordance with JIS L 0849:2013 such that the first hard coat is on the surface side, and a steel wool of #0000 is attached to a rubbing finger of the Gakushin-type tester. Then, a load of 500 g is applied, and the surface of the first hard coat is reciprocatingly rubbed 9000, 10000, 11000, 12000, or 13000 times, and when the rubbed portion is visually observed, no scratch is found for each of these times, and/or the total light transmittance may be 85% or more, 88% or more, or 90% or more, and/or the minimum bending radius may be 70 mm or less, 60 mm or less, or 50 mm or less, and/or the water contact angle may be 95 degrees or more, 100 degrees or more, or 105 degrees or more, and/or the water contact angle of the surface of the first hard coat after 20000 reciprocating wipes with a cotton may be 95 degrees or more, 100 degrees or more, or 105 degrees or more, or the water contact angle after 25000 reciprocating wipes with a cotton may be 95 degrees or more, 100 degrees or more, or 105 degrees or more, and/or the yellowness index may be 3 or less, 2 or less, or 1 or less.

### Examples

The present invention will be now described by referring to Examples, but the present invention is not limited to these Examples. Any Example falling outside the scope of the claims is provided for reference purposes only.

### Measurement/evaluation methods for physical properties

### (i) Abrasion resistance 1 (resistance against steel wool)

A hard coat laminated film was placed on a Gakushin-type tester (friction tester type 2) in accordance with JIS L0849:2013 so that the first hard coat was on the surface side. A steel wool of #0000 was subsequently attached to a rubbing finger of the Gakushin-type tester and a load of 500 g was then applied. After 9000 reciprocating rubbings of the surface of the test piece under conditions that the moving speed of the rubbing finger was 300 mm/min and the moving distance was 30 mm, the rubbed portion was visually observed. In the case where no scratch was found, the operation of additionally carrying out 1000 reciprocating rubbings and then visually observing the rubbed portion was repeated. The abrasion resistance was evaluated according to the following criteria.
A: No scratches were found even after 13000 cycles of reciprocation.
B: No scratches were found after 12000 cycles of reciprocation but scratches were found after 13000 cycles of reciprocation.
C: No scratches were found after 11000 cycles of reciprocation but scratches were found after 12000 cycles of reciprocation.
D: No scratches were found after 10000 cycles of reciprocation but scratches were found after 11000 cycles of reciprocation.
E: No scratches were found after 9000 cycles of reciprocation but scratches were found after 10000 cycles of reciprocation.
F: Scratches were found after 9000 cycles of reciprocation.

### (ii) Total light transmittance

The total light transmittance was measured according to JIS K7361-1:1997 by using a turbidimeter "NDH2000" (trade name) available from Nippon Denshoku Industries Co., Ltd.

### (iii) Haze

The haze was measured according to JIS K7136:2000 by using a turbidimeter "NDH2000" (trade name) available from Nippon Denshoku Industries Co., Ltd.

### (iv) Yellowness index

The yellowness index was measured according to JIS K7105:1981 by using a colorimeter "SolidSpec-3700" (trade name) available from Shimadzu Corporation.

### (v) Minimum bending radius

With reference to Bending Formability (B method) in JIS-K6902:2007, a test piece of a hard coat laminated film was conditioned at a temperature of 23°C ± 2°C and a relative humidity of 50 ± 5% for 24 hours, and thereafter the test piece was bent to form a curve at a bending temperature of 23°C ± 2°C at a bending line with a direction perpendicular to the machine direction of the hard coat laminated film so that the first hard coat of the hard coat laminated film was on the outer side, and for the resultant, measurement was performed. The radius of the front face of the shaping jig having the smallest radius of the front face among shaping jigs with no crack generated was defined as the minimum bending radius. The "front face" has the same meaning as the term regarding a shaping jig in the B method defined in Paragraph 18.2 in JIS K6902:2007.

### (vi) Water contact angle

The water contact angle of a hard coat laminated film was measured for the surface of the first hard coat with an automatic contact angle meter "DSA 20" (trade name) available from KRUSS GmbH by using a method to calculate from the width and the height of a water drop (as indicated in JIS R3257:1999).

### (vii) Abrasion resistance 2 (water contact angle after wipes with cotton)

A test piece of a hard coat laminated film was prepared in a size of 150 mm length and 50 mm width so that the machine direction of the hard coat laminated film corresponded to the longitudinal direction of the test piece, and the test piece was placed on a Gakushin-type tester in accordance with JIS L0849:2013 so that the first hard coat of the hard coat laminated film was on the surface side. A stainless steel sheet (10 mm length, 10 mm width, 1 mm thickness) covered with a four-ply gauze (a type 1 medical gauze available from Kawamoto Corporation) was attached to a rubbing finger of the Gakushin-type tester, and the resultant was set so that the sheet face of the stainless steel sheet came into contact with the test piece and a load of 350 g was applied. After 10000 reciprocating rubbings of the surface of the first hard coat of the test piece under conditions that the moving distance of the rubbing finger was 60 mm and the speed was 1 cycle/sec, the water contact angle on the cotton-wiped portion was measured in accordance with the method in the (vi). In the case where the water contact angle was 95° or more, the operation of additionally carrying out 5000 reciprocating rubbings and then measuring the water contact angle on the cotton-wiped portion in accordance with the method in the (vi) was repeated, and evaluation was performed by using the following criteria.
A: The water contact angle was 95° or more even after 25000 cycles of reciprocation.
B: The water contact angle was 95° or more after 20000 cycles of reciprocation but the water contact angle was less than 95° after 25000 cycles of reciprocation.
C: The water contact angle was 95° or more after 15000 cycles of reciprocation but the water contact angle was less than 95° after 20000 cycles of reciprocation.
D: The water contact angle was 95° or more after 10000 cycles of reciprocation but the water contact angle was less than 95° after 15000 cycles of reciprocation.
E: The water contact angle was less than 95° after 10000 cycles of reciprocation.

### (viii) Surface smoothness (surface appearance)

The surface (i.e., each of both surfaces) of a hard coat laminated film was visually observed while irradiating with a fluorescent light from various incident angles, and evaluation was performed by using the following criteria.
⊚ (very good): No undulations or flaws were found on the surface. No cloudiness was perceived even when the surface was seen through with a light irradiated closely.
O (good): A portion with a little cloudiness was found when the surface was seen through with a light irradiated closely.
△ (slightly poor): Undulations or flaws were found on the surface in a small quantity when the surface was looked at closely. Further, cloudiness was perceived.
× (poor): Undulations or flaws were found on the surface in a large quantity. Further, cloudiness was clearly perceived.

### (ix) Cross-cut test (adhesiveness)

In accordance with JIS K5600-5-6:1999, a square lattice pattern cut consisting of 100 cells (1 cell = 1 mm x 1 mm) was provided on the surface of the first hard coat of a hard coat laminated film. Thereafter, a tape for adhesion tests was attached on the square lattice pattern cut and rubbed with fingers and then peeled off. The criteria for evaluation were in accordance with Table 1 in the above standard of JIS.

Classification 0: The edges of the cuts were completely smooth; none of the squares of the lattice was detached.

Classification 1: Detachment of small flakes of the coating was seen at the intersections of the cuts. A cross-cut area of not greater than 5% apparently was affected.

Classification 2: The coating flaked along the edges and/or at the intersections of the cuts. A cross-cut area of greater than 5% apparently, but not greater than 15%, was affected.

Classification 3: The coating flaked along the edges of the cuts partly or wholly in large ribbons, and/or it flaked partly or wholly on different parts of the squares. A cross-cut area of greater than 15% apparently, but not greater than 35%, was affected.

Classification 4: The coating flaked along the edges of the cuts partly or wholly in large ribbons and/or some squares detached partly or wholly. A cross-cut area of greater than 35% apparently, but not greater than 65%, was affected.

Classification 5: This criterion was defined as the case where the degree of flaking was greater than that in Classification 4.

### (x) Cutting processability (condition of curved cutting-processed line)

A hard coat laminated film was provided with a cut hole in true circle with a diameter of 2 mm and a cut hole in true circle with a diameter of 0.5 mm by using a router processing machine automatically controlled with a computer. The mill used then was a four-bladed super-hard-alloy mill with nicks that has a cylindrically round tip, and the blade diameter was appropriately selected depending on a portion to be processed. Subsequently, the cut hole with a diameter of 2 mm was observed for the cut edge surface visually or with a microscope (100x) and evaluation was performed by using the following criteria. Similarly, the cut hole with a diameter of 0.5 mm was observed for the cut edge surface visually or with a microscope (100x) and evaluation was performed by using the following criteria. The result of the former case and the result of the latter case were listed in this order in the tables below.
⊚ (very good): No crack or burr was found even in microscopic observation.
O (good): No crack was found even in microscopic observation. However, a burr was found.
△ (slightly poor) No crack was visually found. However, a crack was found in microscopic observation.
× (poor): A crack was found even in visual observation.

(xi) Pencil hardness

The pencil hardness of a hard coat laminated film was measured for the surface of the first hard coat according to JIS K5600-5-4 by using a pencil "UNI" (trade name) available from Mitsubishi Pencil Co., Ltd under the condition of a load of 750 g.

### Raw materials used

### (A) Multifunctional (meth)acrylate:

(A-1) "Biscoat #802" (trade name) that is a mixture of tripentaerythritol acrylate, dipentaerythritol acrylate, monopentaerythritol acrylate, and polypentaerythritol acrylate, available from Osaka Organic Chemical Industry Ltd.: the content of tripentaerythritol acrylate is 60 mass%.
(A-2) Dipentaerythritol hexaacrylate (hexafunctional).

### (B) Water repellent:

(B-1) An acryloyl group-containing fluoropolyether water repellant "KY-1203" (trade name) available from Shin-Etsu Chemical Co., Ltd.: solid content 20 mass%
(B-2) A methacryloyl group-containing fluoropolyether water repellant "FOMBLIN MT70" (trade name) available from Solvay S.A.: solid content 70 mass%
(B'-1) An acrylic/ethylene copolymer wax water repellent

### (C) Leveling agent:

(C-1) An acrylic polymer leveling agent "BYK-399" (trade name) available from Big Chemy Japan KK: solid content 100 mass%

### (D) Inorganic fine particles:

(D-1) Silica fine particles having an average particle diameter of 20 nm the surface of which has been treated with a silane coupling agent having a vinyl group

### (E) Optional component:

(E-1) The phenyl ketone photopolymerization initiator (1-hydroxycyclohexyl phenyl ketone) "SB-PI714" (trade name) available from Shuang Bang Industrial Corp.
(E-2) α-hydroxy acetophenone photopolymerization initiator (2-hydroxy-1-(4-(4-(2-hydroxy-2-methyl-propionyl)-benzyl)phenyl)-2-methyl-propan-1-one) "IRGACURE 127" (trade name) available from BASF SE.
(E-3) 1:1 (mass ratio) mixed solvent of 1-methoxy-2-propanol and methyl isobutyl ketone
(E-4) Silica fine particles having an average particle diameter of 20 nm the surface of which has been treated with a silane coupling agent having a vinyl group

### (HI) Coating material for forming first hard coat:

(H1-1) A coating material was obtained by mixing and stirring 100 parts by mass of the (A-1), 2 parts by mass (0.40 parts by mass in terms of solid content) of the (B-1), 0.06 parts by mass (0.042 parts by mass in terms of solid content) of the (B-2), 3 parts by mass of the (E-1), 1 part by mass of the (E-2) and 120 parts by mass of the (E-3). The formulation is shown in Table 1. Note that values in terms of solid content are listed for the (B-1) and the (B-2) in the table (the same applies hereinafter).

(HI-2 to HI-7, H1'-1 to H1'-5) Each coating material was obtained in the same way as in the (H1-1) except that the components and their ratio were changed as shown in Table 1 or 2.

### (H2) Coating material for forming second hard coat:

(H2-1) A coating material was obtained by mixing and stirring 100 parts by mass of the (A-1), 0.5 parts by mass of the (C-1), 3 parts by mass of the (E-1), 1 part by mass of the (E-2) and 120 parts by mass of the (E-3). The formulation is shown in Table 1.

(H2-2 to H2-6) Each coating material was obtained in the same way as in the (H2-1) except that the components and their ratio were changed as shown in Table 1 or 2.

### (P) Transparent resin film:

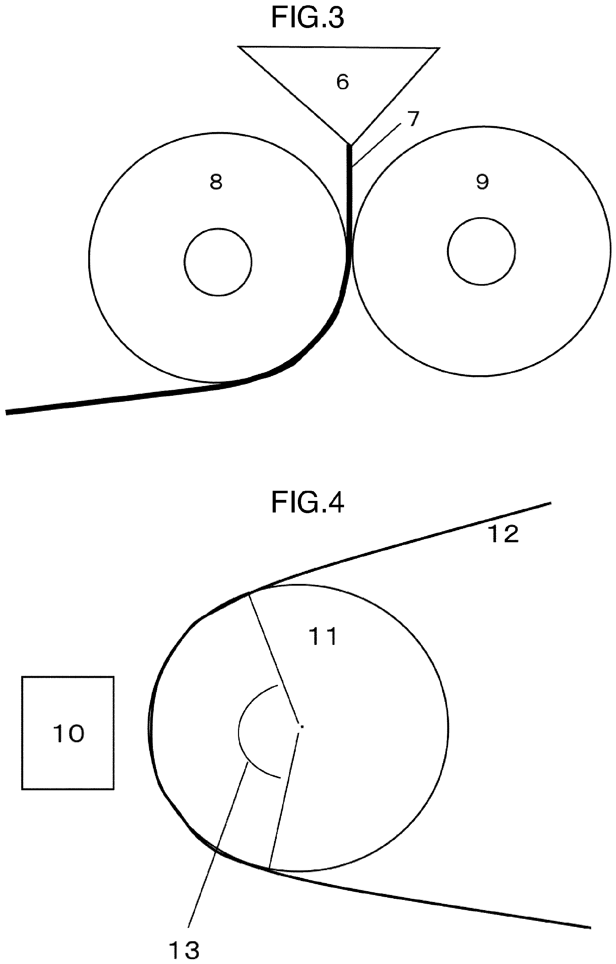

(P-1) Using an apparatus (see Fig. 3) equipped with a two-component/three-layer multimanifold-type coextrusion T-die 6 and a winder having a mechanism to pressurize a melted film 7 with a first mirror-finished roll 8 (i.e. a roll to hold a melted film and send the melted film to a subsequent transfer roll) and a second mirror-finished roll 9, a two-component/three-layer multilayer resin film in which both outer layers (α1 layer and α2 layer) were formed of a poly(meth)acrylimide "PLEXIMID TT50" (trade name) available from Evonik Industry AG and an intermediate layer (β layer) was formed of an aromatic polycarbonate "CALIBRE 301-4" (trade name) available from Sumika Styron Polycarbonate Limited was continuously coextruded from the coextrusion T-die, and the coextruded product was fed between the rotating first mirror-finished roll and the rotating second mirror-finished roll so that the α1 layer was on the first mirror-finished roll side, and pressurized. As a result, a transparent resin film having a total thickness of 250 µm was obtained in which the layer thickness of the α1 layer was 80 µm, the layer thickness of the β layer was 90 µm and the layer thickness of the α2 layer was 80 µm. Regarding the conditions set for this operation, the temperature of the T-die, the temperature of the first mirror-finished roll, the temperature of the second mirror-finished roll and the wind-up speed were set to 300°C, 130°C, 120°C and 6.5 m/min, respectively.

(P-2) A transparent resin film was obtained in the same way as in the (P-1) except that an acrylic resin, containing a structural unit derived from methyl methacrylate in an amount of 76.8 mol% and a structural unit derived from vinylcyclohexane in an amount of 23.2 mol%, assuming that the sum of structural units derived from polymerizable monomers was 100 mol%, was used as both outer layers in place of the "PLEXIMID TT50" (trade name).

(P-3) A transparent resin film was obtained in the same way as in the (P-1) except that the layer thickness ratio was changed so that the layer thickness of the α1 layer, the layer thickness of the β layer and the layer thickness of the α2 layer were 60 µm, 130 µm and 60 µm, respectively.

(P-4) A transparent resin film was obtained in the same way as in the (P-1) except that the layer thickness ratio was changed so that the layer thickness of the α1 layer, the layer thickness of the β layer and the layer thickness of the α2 layer were 40 µm, 170 µm and 40 µm, respectively.

(P-5) An acrylic resin film "TECHNOLLOY S001G" (trade name) available from Sumitomo Chemical Co., Ltd.: thickness 250 µm

(P-6) A biaxially oriented polyethylene terephthalate film "DIAFOIL" (trade name) available from Mitsubishi Plastics, Inc.: thickness 250 µm

(P-7) Using an apparatus equipped with a monolayer T-die and a winder having a mechanism to pressurize a melted film with a first mirror-finished roll (i.e. a roll to hold a melted film and send the melted film to a subsequent transfer roll) and a second mirror-finished roll, an aromatic polycarbonate "CALIBRE 301-4" (trade name) available from Sumika Styron Polycarbonate Limited was continuously extruded from the T-die, and the extruded product was fed between the rotating first mirror-finished roll and the rotating second mirror-finished roll, and pressurized. As a result, a transparent resin film having a total thickness of 250 µm was obtained. Regarding the conditions set for this operation, the temperature of the T-die, the temperature of the first mirror-finished roll, the temperature of the second mirror-finished roll and the wind-up speed were set to 320°C, 140°C, 120°C and 5.6 m/min, respectively.

### Example 1

Both surfaces of the (P-1) were subjected to a corona discharge treatment. Both surfaces had a wetting index of 64 mN/m. Subsequently, the surface on the α2 layer side was coated with the (H2-1) by using a die-type applicator so that the wet coat thickness was 22.6 µm (thickness after curing: 10.5 µm). Subsequently, the resultant was passed in a drying furnace with the inner temperature set to 80°C at a line speed such that the time required to pass through from the inlet to the outlet was 1 minute, and then treated to form a second hard coat with a curing apparatus (see Fig. 4) having a UV irradiator 10 of high-pressure mercury lamp type and a mirror-finished metal roll 11 having a diameter of 25.4 cm which were disposed opposite to each other, under conditions that the temperature of the mirror-finished metal roll 11 was 60°C and the integrated amount of light was 500 mJ/cm². In Fig. 4, reference numeral 12 denotes a web, and reference numeral 13 denotes a holding angle. Subsequently, the surface on the α1 layer side was coated with the (H1-1) by using a die-type applicator so that the wet coat thickness was 22.6 µm (thickness after curing: 10.5 µm). Subsequently, the resultant was passed in a drying furnace with the inner temperature set to 80°C at a line speed such that the time required to pass through from the inlet to the outlet was 1 minute, and then treated to form a first hard coat with a curing apparatus (see Fig. 4) having a UV irradiator 10 of high-pressure mercury lamp type and a mirror-finished metal roll 11 having a diameter of 25.4 cm which were disposed opposite to each other, under conditions that the temperature of the mirror-finished metal roll 11 was 60°C and the integrated amount of light was 500 mJ/cm², thus obtaining a hard coat laminated film. The above tests (i) to (xi) were carried out. The results are shown in Table 1. In Table 1, "HC" stands for abbreviation of hard coat (also in the following tables).

### Examples 2 to 7, Examples 1S to 5S

Each hard coat laminated film was prepared and measurement/evaluation of the physical properties was performed in the same way as in Example 1 except that a coating material to be used was changed to the coating material shown in Table 1 or 2. The results are shown in Table 1 or 2. In Example 2S, since the water contact angle was less than 95 degrees from the beginning, the test for abrasion resistance 2 was omitted.

### Examples 8 to 10, Example 6S

Each hard coat laminated film was prepared and measurement/evaluation of the physical properties was performed in the same way as in Example 1 except that the thicknesses of the first and second hard coats were changed to the thicknesses shown in Table 3. The results are shown in Table 3.

### Examples 11 to 16

Each hard coat laminated film was prepared and measurement/evaluation of the physical properties was performed in the same way as in Example 1 except that a transparent resin film to be used was changed to the transparent resin film shown in Table 3 or 4. The results are shown in Table 3 or 4.

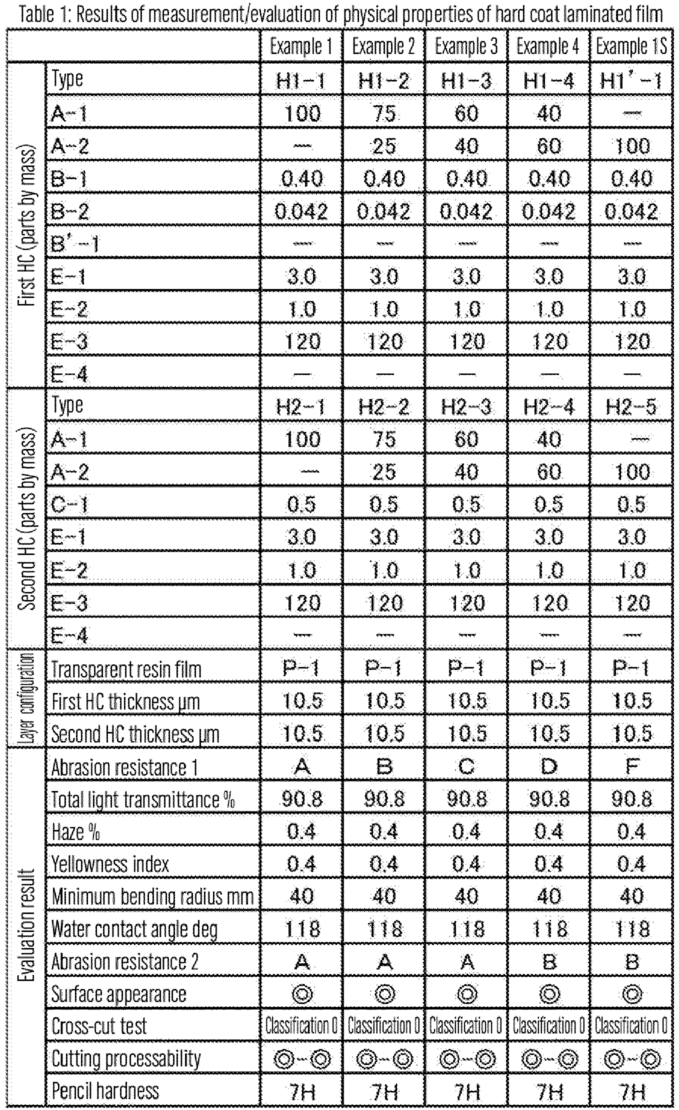

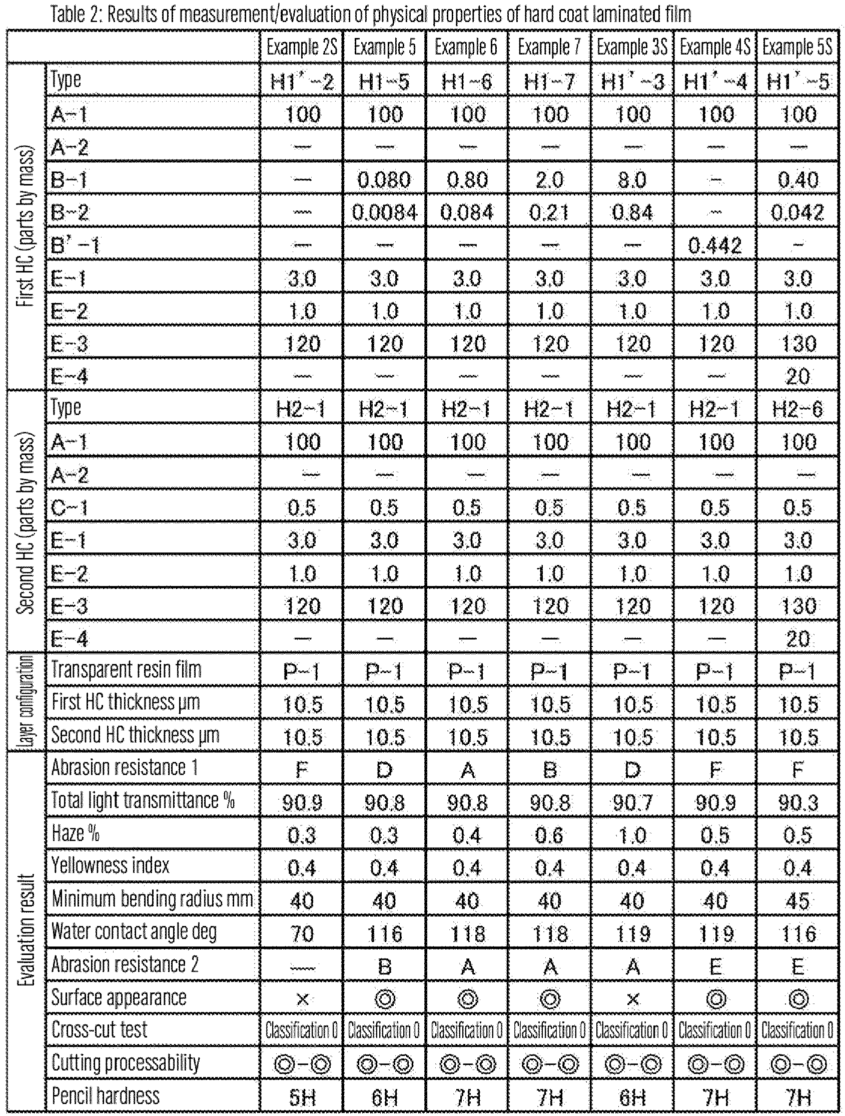

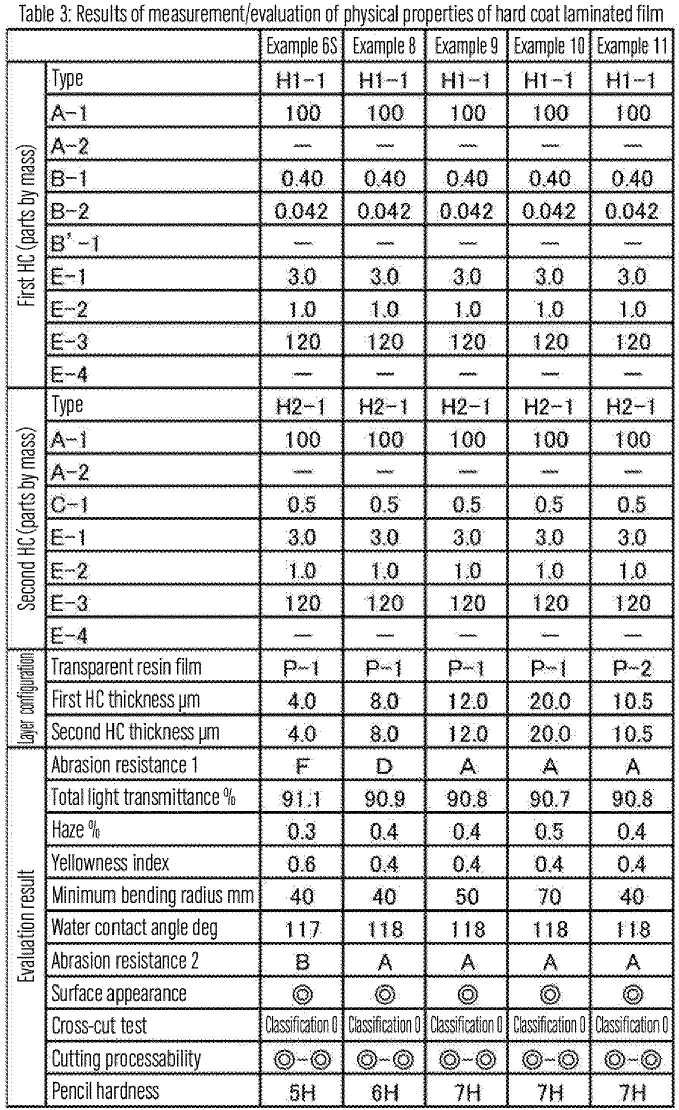

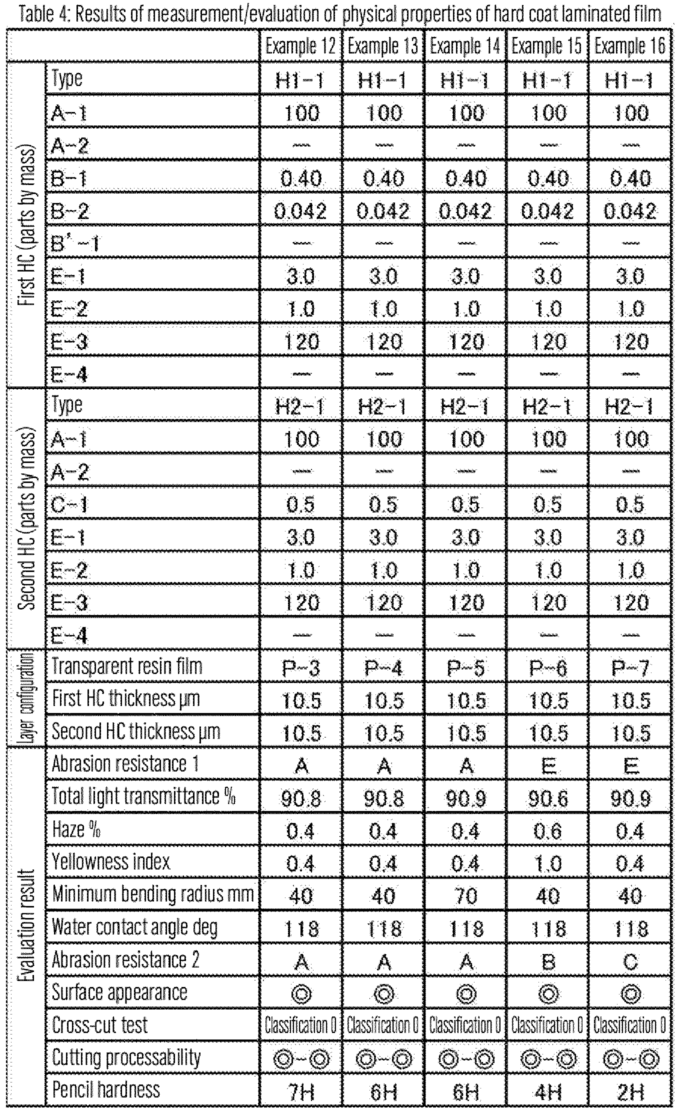

These experimental results showed that the hard coat laminated films according to the present invention exhibited physical properties suitable for a display faceplate in an image display device with a touch panel function.

In the test for (i) abrasion resistance 1 (resistance against steel wool) of the hard coat laminated film of Example 5S, when a test was conducted in which the number of times of rubbing for the first time was changed from 9000 cycles of reciprocation to 1000 cycles of reciprocation, scratches already could be found after 1000 cycles of reciprocation.

### REFERENCE SIGNS LIST

1: First hard coat
2: First poly(meth)acrylimide resin layer (α1)
3: Aromatic polycarbonate resin layer (β)
4: Second poly(meth)acrylimide resin layer (α2)
5: Second hard coat
6: T-die
7: Melted film
8: First mirror-finished roll
9: Second mirror-finished roll
10: UV irradiator
11: Mirror-finished metal roll
12: Web
13: Holding angle

## Claims

1. A hard coat laminated film comprising, in order from a surface layer side, a first hard coat and a transparent resin film layer,
wherein the first hard coat is formed by a coating material comprising:
(A) 100 parts by mass of a multifunctional (meth)acrylate comprising 20 mass% or more of tripentaerythritol acrylate; and
(B) 0.01 to 7 parts by mass of a (meth)acryloyl group-containing fluoropolyether water repellent based on 100 parts by mass of component (A);
wherein the first hard coat contains less than 1 part by mass of inorganic particles based on 100 parts by mass of component (A);
wherein the thickness of the first hard coat is more than 5 µm and 60 µm or less;
wherein the hard coat laminated film has a yellowness index of 3 or less as measured according to the description; and
wherein the hard coat laminated film has a total light transmittance of 85% or more, as measured with a turbidimeter in accordance with JIS K7361-1:1997.

2. The hard coat laminated film according to claim 1, wherein the thickness of the first hard coat ranges from 8 to 60 µm.

3. The hard coat laminated film according to claim 1 or 2 satisfying the following property (i):
(i) the hard coat laminated film is placed on a Gakushin-type tester in accordance with JIS L 0849:2013 so that the first hard coat is on the surface side, a steel wool of #0000 is attached to a rubbing finger of the Gakushin-type tester, a load of 500 g is then applied, the surface of the first hard coat is reciprocatingly rubbed 9000 times, and when the rubbed portion is visually observed, no scratch is found.

4. The hard coat laminated film according to any one of claims 1 to 3, wherein the transparent resin film is a transparent multilayer film with
a first poly(meth)acrylimide resin layer (α1);
an aromatic polycarbonate resin layer (β); and
a second poly(meth)acrylimide resin layer (α2) directly laminated in this order.

5. The hard coat laminated film according to any one of claims 1 to 4, wherein the (A) multifunctional (meth)acrylate comprising 20 mass% or more of tripentaerythritol acrylate is a mixture of
tripentaerythritol acrylate; and
at least one selected from the group consisting of dipentaerythritol acrylate, monopentaerythritol acrylate, and polypentaerythritol acrylate.

6. The hard coat laminated film according to any one of claims 1 to 5,
wherein the hard coat laminated film comprises, in order from the surface layer side, the first hard coat, the transparent resin film layer, and a second hard coat,
wherein the second hard coat is formed from a coating material comprising:
(A) 100 parts by mass of a multifunctional (meth)acrylate comprising 20 mass % or more of tripentaerythritol acrylate; and
(C) 0.01 to 10 parts by mass of a leveling agent based on 100 parts by mass of component (A).

7. Use of the hard coat laminated film according to any one of claims 1 to 6 for a member in an image display device.

8. An image display device comprising the hard coat laminated film according to any one of claims 1 to 6.

## Patentansprüche

1. Hartbeschichtungsverbundfolie, die in der folgenden Reihenfolge eine Oberflächenschichtseite, eine erste harte Schicht und eine transparente Harzfolienschicht umfasst,
wobei die erste Hartbeschichtung durch ein Beschichtungsmaterial ausgebildet wird, das umfasst:
(A) 100 Masseteile eines multifunktionellen (Meth)acrylats, das 20 Masse-% oder mehr Tripentaerythritolacrylat umfasst; und
(B) 0,01 bis 7 Masseteile eines (Meth)acryloylgruppen enthaltenden wasserabweisenden Fluorpolyethers, bezogen auf 100 Masseteile der Komponente (A);
wobei die erste Hartbeschichtung weniger als 1 Masseteil anorganischer Teilchen, bezogen auf 100 Masseteile der Komponente (A), enthält;
wobei die Dicke der ersten Hartbeschichtung mehr als 5 µm und 60 µm oder weniger beträgt;
wobei die Hartbeschichtungsverbundfolie einen Vergilbungsindex von 3 oder weniger aufweist, wie gemäß der Beschreibung gemessen; und
wobei die Hartbeschichtungsverbundfolie eine Gesamtlichtdurchlässigkeit von 85 % oder mehr aufweist, wie mit einem Trübungsmesser in Übereinstimmung mit JIS K7361-1:1997 gemessen.

2. Hartbeschichtungsverbundfolie nach Anspruch 1, wobei die Dicke der ersten Hartbeschichtung im Bereich von 8 bis 60 µm liegt.

3. Hartbeschichtungsverbundfolie nach Anspruch 1 oder 2, die die folgende Eigenschaft erfüllt:
(i) die Hartbeschichtungsverbundfolie wird auf ein Prüfgerät des Typs Gakushin in Übereinstimmung mit JIS L 0849:2013 platziert, sodass sich die erste Hartbeschichtung auf der Oberflächenseite befindet, eine #0000-Stahlwolle wird an einem Reibefinger des Prüfgeräts des Typs Gakushin befestigt, eine Last von 500 g wird dann aufgebracht, die Oberfläche der ersten Hartbeschichtung wird 9000-mal hin- und hergerieben, und wenn der geriebene Abschnitt visuell beobachtet wird, wird kein Kratzer gefunden.

4. Hartbeschichtungsverbundfolie nach einem der Ansprüche 1 bis 3, wobei die transparente Harzfolie eine transparente Mehrschichtfolie ist mit
einer ersten Poly(meth)acrylimid-Harzschicht (α1);
einer aromatischen Polycarbonat-Harzschicht (β); und
einer zweiten Poly(meth)acrylimid-Harzschicht (α2), die direkt in dieser Reihenfolge laminiert ist.

5. Hartbeschichtungsverbundfolie nach einem der Ansprüche 1 bis 4, wobei das (A) multifunktionelle (Meth)acrylat, das 20 Masse-% oder mehr von Tripentaerythritolacrylat umfasst, ein Gemisch ist aus
Tripentaerythritolacrylat; und
wenigstens einem, ausgewählt aus der Gruppe, bestehend aus Dipentaerythritolacrylat, Monopentaerythritolacrylat und Polypentaerythritolacrylat.

6. Hartbeschichtungsverbundfolie nach einem der Ansprüche 1 bis 5,
wobei die Hartbeschichtungsverbundfolie in der folgenden Reihenfolge die Oberflächenschichtseite, die erste Hartbeschichtung, die transparente Harzfolienschicht und eine zweite Hartbeschichtung umfasst,
wobei die zweite Hartbeschichtung aus einem Beschichtungsmaterial ausgebildet ist, das umfasst:
(A) 100 Masseteile eines multifunktionellen (Meth)acrylats, umfassend 20 Masse-% oder mehr von Tripentaerythritolacrylat; und
(C) 0,01 bis 10 Masseteile eines Einebners bezogen auf 100 Masseteile der Komponente (A).

7. Verwendung der Hartbeschichtungsverbundfolie nach einem der Ansprüche 1 bis 6 für ein Element in einer Bildanzeigevorrichtung.

8. Bildanzeigevorrichtung, umfassend die Hartbeschichtungsverbundfolie nach einem der Ansprüche 1 bis 6.

## Revendications

1. Film stratifié à revêtement dur comprenant, dans l'ordre à partir d'un côté couche de surface, un premier revêtement dur et une couche de film de résine transparent,
dans lequel le premier revêtement dur est formé par un matériau de revêtement comprenant :
(A) 100 parties en masse d'un (méth)acrylate multifonctionnel comprenant 20% en masse ou plus d'acrylate de tripentaérythritol ; et
(B) 0,01 à 7 parties en masse d'un hydrofuge fluoropolyéther contenant un groupe (méth)acryloyle pour 100 parties en masse de composant (A) ;
dans lequel le premier revêtement dur contient moins de 1 partie en masse de particules inorganiques sur la base de 100 parties en masse de composant (A) ;
dans lequel l'épaisseur du premier revêtement dur est supérieure à 5 µm et inférieure ou égale à 60 µm ;
dans lequel le film stratifié à revêtement dur a un indice de jaunissement de 3 ou moins tel que mesuré selon la description ; et
dans lequel le film stratifié à revêtement dur a une transmittance lumineuse totale de 85% ou plus, telle que mesurée avec un turbidimètre conformément à JIS K7361-1:1997.

2. Film stratifié à revêtement dur selon la revendication 1, dans lequel l'épaisseur du premier revêtement dur est comprise entre 8 et 60 µm.

3. Film stratifié à revêtement dur selon la revendication 1 ou 2 satisfaisant la propriété (i) suivante :
(i) le film stratifié à revêtement dur est placé sur un testeur de type Gakushin conformément à JIS L 0849:2013 de sorte que le premier revêtement dur est du côté surface, une laine d'acier de #0000 est attachée à un doigt de frottement du testeur de type Gakushin, une charge de 500 g est ensuite appliquée, la surface du premier revêtement dur est frottée en va-et-vient 9000 fois, et lorsque la partie frottée est observée visuellement, aucune rayure n'est constatée.

4. Film stratifié à revêtement dur selon l'une quelconque des revendications 1 à 3, dans lequel le film de résine transparent est un film multicouche transparent avec
une première couche de résine de poly(méth)acrylimide (α1) ;
une couche de résine de polycarbonate aromatique (β) ; et
une seconde couche de résine de poly(méth)acrylimide (a2) directement stratifiée dans cet ordre.

5. Film stratifié à revêtement dur selon l'une quelconque des revendications 1 à 4, dans lequel le (A) (méth)acrylate multifonctionnel comprenant 20% en masse ou plus d'acrylate de tripentaérythritol est un mélange
d'acrylate de tripentaérythritol ; et
d'au moins un élément choisi dans le groupe constitué par l'acrylate de dipentaérythritol, l'acrylate de monopentaérythritol et l'acrylate de polypentaérythritol.

6. Film stratifié à revêtement dur selon l'une quelconque des revendications 1 à 5,
dans lequel le film stratifié à revêtement dur comprend, dans l'ordre à partir du côté couche de surface, le premier revêtement dur, la couche de film de résine transparent et un second revêtement dur,
dans lequel le second revêtement dur est formé à partir d'un matériau de revêtement comprenant :
(A) 100 parties en masse d'un (méth)acrylate multifonctionnel comprenant 20% en masse ou plus d'acrylate de tripentaérythritol ; et
(C) 0,01 à 10 parties en masse d'un agent de nivellement pour 100 parties en masse de composant (A).

7. Utilisation du film stratifié à revêtement dur selon l'une quelconque des revendications 1 à 6 pour un élément dans un dispositif d'affichage d'images.

8. Dispositif d'affichage d'images comprenant le film stratifié à revêtement dur selon l'une quelconque des revendications 1 à 6.
